# EUROPEAN PATENT APPLICATION

(11) **EP 2 873 940 A1**
(43) Date of publication of application: **20.05.2015**
(21) Application number: 14192817.6
(22) Date of filing: 12.11.2014
(51) Int. Cl.: F28D 20/00

(54) **Renewable energy storing**

(30) Priority: 15.11.2013 FI 20136134
(71) Applicant: STN Super Travel Net Oy, 01600 Vantaa (FI)
(72) Inventor: Jaakkola, Jyri, 01600 Vantaa (FI)
(74) Representative: Espatent Oy

(57) **Abstract**

A heat buffering system that has a hydrant boiler (100) for storing energy and a hut (101) for housing the hydrant boiler outside a building (102) being heated using the energy stored in the hydrant boiler. The hut is insulated. The system has a heat source coupling (140,141) for connecting a local solar energy collector to the hydrant boiler. Heat is stored in the hydrant boiler in separately controllable layers. Heat is transferred from one of the layers to at least one other layer. A controller (180) is configured to control charging and discharging of the hydrant boiler (100). Buffered energy can be used for heating the building (102) or for selling to others via district heating.

## Description

### TECHNICAL FIELD

The present invention generally relates to renewable energy storing. The invention relates particularly, though not exclusively, to selectively storing and releasing of renewable energy, bioenergy and other forms of energy.

### BACKGROUND ART

This section illustrates useful background information without admission of any technique described herein representative of the state of the art.

Most of domestic energy consumption is fluctuating in the pace of the modern society. People wake up, prepare their breakfasts, go to work or school and return to home and use energy intensive appliances and showers so that there are clear energy consumption peaks at particular times. Moreover, the production of renewable energy is typically fluctuating. Solar power can be produced only in presence of sufficient insolation and windmills require suitable winds to produce electricity. Except for hydropower that use potential energy buffered by dams, the renewable energy is generally somewhat fluctuating. In result, fair deal of reserve power is needed.

Except for the use of oil as an energy source of domestic heating, the energy supply is typically based on online supplying through an energy grid. In case of gas lines, there may be some buffer tanks, but especially with electricity, the supply must always, at every instant, meet the consumption. Therefore, it has been alleged that for each MW of windmill power, another MW of diesel generator power is needed. Indeed, a major obstacle in increasing renewable energy use is the expensive storage of the energy consumption to balance the fluctuations in both the consumption and the production. On the other hand, the modern society is increasingly vulnerable to energy supply disturbances.

At present, only hydropower offers a commercially feasible reserve power mechanism that can be adapted in the matter of minutes, while the increase of the need for quickly adjustable reserve power or adjustable energy consumption is rapidly increasing. To some extent, the power consumption can be balanced e.g. by electric floor heating of concrete structures and hot water boilers during night time. In case of the floor heating, the ecologically friendly mode of operation unfortunately goes against the natural needs as then the houses are heated in the night when the room temperatures could be lowered for health reasons and the maximum temperatures may be reached in the morning just as people leave their homes empty for the day. On the other hand, the hot water boilers are typically designed to ensure sufficient hot water for showers and other consumption by the inhabitants of a building such as detached house. As the sole reason for obtaining a boiler is to acquire heat storage capacity, the boilers are dimensioned to be as small as possible. As such, their capacity for energy supply buffering is marginal. Moreover, the hot water boilers have high energy loss due to need to reduce their exterior space in comparison to their water content that makes thick insulation impractical. Worse still, the practical reserve of a typical boiler is limited by the need to produce hot domestic water e.g. for shower. Therefore, the hot water boiler could be used e.g. only so that its top temperature varies between some 60°C to 80°C.

Larger boilers of e.g. 1-2 m³ water content have been built for enabling batch type heating e.g. with wood furnaces with which a normal Finnish detached house of about 500 m³ can be kept warm from one day to another at temperatures of about -10°C. Such boilers are typically installed on constructing or thoroughly renovating a house e.g. in a cellar as they would not fit through normal doors and windows and their sheer weight would typically require some structural enforcements. Therefore, such boilers are generally avoided for saving the valuable space within houses for better use such as rooms and storage space of the inhabitants.

A new solar power system known as Solixi® has been developed for collecting solar energy using heliostat mirrors and two-sided heat collectors. Solixi is particularly designed for concentrated solar power (CSP) production on roofs of practically any shape with optimal positioning and orientation so that very large heat fluxes can be obtained from insolation. However, the greater the heat flux, the more capacious a boiler is needed for reserving the collected energy. This problem may sometimes reduce the efficiency of such otherwise very effective energy source.

One further alternative for balancing fluctuations in supply and demand would be to build larger grids: if the whole globe were networked, the sun would always shine somewhere and somewhere people would be boiling water for afternoon tea. Such grid expansion would yet consume unfeasible amounts of energy and natural resources for the building and for the energy transfer losses.

In the absence of commercially feasible alternatives, there have been very creative suggestions such as the use of electric cars' batteries for storing and releasing energy for fluctuation balancing.

It is an object of the present invention to provide cost-efficient techniques for balancing the fluctuation of the supply and demand of energy production especially in case of online transferred energy such as electricity or district heating.

### SUMMARY

The inventor has realized that the present heat reservoirs or hot water boilers are restricted because of some common conceptual restrictions that systematically restraint the freedom of choice in real life. For instance, the physical properties of water and common safety and material requirements have mandated an upper temperature limit somewhat below the boiling point of water, 100°C. Therefore, the normal operation range varies between some 60 to 80 degrees of top temperatures. Thanks to stratifying the water in cooler bottom layer and hot top layer, the effective capacity of the boiler can be somewhat extended, but yet the upper limit substantially cuts the efficiency of the boiler. Moreover, the limited space in the domestic heating buildings such as detached houses and even office buildings, combined with the normal design choices such plural pipe connections, meters and valves connected to the boilers, drastically reduce the insulation. Worse still, it is a norm that a boiler leaks substantial amounts of heat. That fact being given, it makes no sense to increase the temperatures as that would just increase the heat losses in the fourth power of temperature (measured in Kelvins). Moreover, the useful effect of such heat loss in support of heating in the winter time is a convenient excuse while it is easily forgotten that excess heating in the summer time may require far most costly cooling.

According to a first example aspect of the invention there is provided a system comprising:
a hydrant boiler for storing energy for a building;
a hut configured to house the hydrant boiler, wherein the hut is separated by insulation from the building;
a heat source coupling for connecting a solar energy collector to the hydrant boiler.

The system may further comprise a controller configured to obtain a consumption forecast and to control charging and discharging of the hydrant boiler based on the consumption forecast.

The consumption forecast may comprise or be a weather forecast.

The discharging may refer to preparing the hydrant boiler for receiving additional energy into the hydrant boiler. The additional energy may be any of solar energy; predicted inexpensive wind power; and/or district heating. The preparing may comprise transferring heat from one layer to another within the hydrant boiler. The preparing may comprise temporarily stopping of charging the hydrant boiler by any online energy source. The stopping may be ceased when the price and/or availability of online energy changes in a predetermined manner, e.g. price falls beyond a threshold level. The discharging may refer to discharging only a portion of the stored energy while retaining remaining energy available for further discharging.

The system may comprise an online energy input and an online heater configured to charge the hydrant boiler.

The term building may refer to a building complex or group of buildings. The buildings may be any of detached houses; terrace houses; blocks of flats; office buildings; shopping malls; and industrial production buildings.

The controller may be configured to control the online heater to charge the hydrant boiler based on at least one of: weather forecast; online energy availability forecast; online energy source and online energy price forecast.

The system may further comprise stratification means configured to functionally divide the hydrant boiler into a plurality of separately controllable layers. The system may further comprise inter-layer heat transfer means for transferring heat from one of the separately controllable layers to at least one another layer. The inter-layer heat transfer means may comprise a pump and a water conductor.

The water may comprise one or more functional additives. The proportion of the functional additives may be up to 5, 10, 20, 30 or anything less than 50 %.

The top of the hydrant boiler may be insulated by a continuous layer of insulating material. The top of sides of the hydrant boiler may further be insulated by a continuous layer of insulating material. The top and the top sides of the hydrant boiler may be insulated without any through-holes or apertures. The height of the insulated portion of the sides may be at least 20, 30, 40, 50 or 60 per cent of the total height of the hydrant boiler.

The hydrant boiler may comprise a pressure vessel capable of holding pressurized water. The pressurized water may be pressurized to up to 3 bars, 10 bars or 15 bars. The height of the hydrant boiler may refer to the height of the pressure vessel.

The hut may comprise a weather proof outside layer. The hut may comprise an insulated inside layer. The inside layer may be continuous except for one or more of the following apertures therein:
- service door or lid;
- ventilation connection;
- energy transfer connections;
- control connections;
- drain; and
- water supply connection.

The hut may be built e.g. in a parking hall or underground.

The hydrant boiler may be configured to store, when fully charged, sufficient heat for heat consumption of the building during wintertime for at least 48 hours using only roof-mounted solar collector energy.

The proportion of apertures with relation to the total inside layer surface area measured on the inside of the inside layer may be less than 2 per cent, 1 per cent, 0.5 percent or 0.1 per cent.

The controller may be remote controlled. The controller may be controlled over a data network. The data network may be a packet data network. The data network may be accessible through the Internet. The data network may be a cellular data network.

The system may further comprise a renewable energy collector. The renewable energy collector may comprise at least one of a solar collector; and wind mill. The solar collector may be a concentrated solar power collector. The solar collector may be configured to be roof-mounted.

The hydrant boiler may be located in the proximity of the renewable energy collector. The proximate location may reduce heat losses, material costs and space requirements of the system.

The hut may be built around the hydrant boiler. The hydrant boiler may be replaceable by removing at least one wall or roof of the hut.

The hydrant boiler may be configured to operate with water pressure exceeding at least 1.2 times the boiling point of the water contained by the hydrant boiler at 101,3 kPa.

The outer layer of the hut may be weather proof.

The hut may form a surrounding space around the hydrant boiler. The surrounding space may be occupied by air; dry gas such as dry nitrogen; insulation particles such as insulation chips; or insulating curtains. Alternatively, the surround space may be at least partly in vacuum. The space may contain various connectors, valves and other equipment that is not normally insulated or poorly insulated for reducing heat losses from such equipment.

The hut may be located on a separate foundation next to a building being heated. Alternatively, the hut may be located on at least partly shared foundation with the building being heated.

The foundation of may comprise a drain connection. The drain connection may be directed to a district draining or ditch.

The foundation of may comprise a steam connection. The steam connection may be directed to a district draining or ditch.

The hut may comprise ventilation for safe release of steam and avoiding excessively pressurizing the hut. The hut may comprise a seamless top part such as an inverted cup.

The hut may be configured mountable after installation of the hydrant boiler. The hut may be replaceable around the hydrant boiler. The hut may be removable for maintenance of the hydrant boiler.

The hydrant boiler may be cylindrical. The hydrant boiler may be upright.

According to a second example aspect of the invention there is provided a method comprising:
obtaining energy consumption forecasts for heat consumption in a building to which heat is supplied from a hydrant boiler; and
controlling charging and discharging of the boiler based on the consumption forecast.

The method may further comprise controlling stratification in the hydrant boiler based on the consumption forecast.

The method may further comprise performing multi-stage heating of hot domestic water. Preheating may be performed in one stage with a layer in the hydrant boiler having a temperature of 10°C to 80°C. Further heating may be performed in a subsequent stage in a layer in the hydrant boiler having a temperature of 60°C to 90°C.

Atop section of the hydrant boiler may be heated to a temperature up to 95°C, 120°C, 130°C, 150°C, 160°C, 180°C or 200°C. The top section may be cooled down to 20°C by transferring heat to the bottom section during normal operation of the hydrant boiler.

According to a third example aspect of the invention there is provided a computer program comprising computer executable program code which when executed by at least one processor causes an apparatus at least to perform the method of the second example aspect.

According to a fourth example aspect of the invention there is provided a computer program product comprising a non-transitory computer readable medium having the computer program of the third example aspect stored thereon.

Any foregoing memory medium may comprise a digital data storage such as a data disc or diskette, optical storage, magnetic storage, holographic storage, and/or opto-magnetic storage. The memory medium may be formed into a device without other substantial functions than storing memory or it may be formed as part of a device with other functions, including but not limited to a memory of a computer, a chip set, and a sub assembly of an electronic device.

According to a fifth example aspect of the invention there is provided a method comprising:
storing heat energy in a hydrant boiler for a building;
characterized by:
   housing the hydrant boiler in a hut that is separated by insulation from the building;
   primarily receiving and storing heat from a solar energy collector to the hydrant boiler;
   secondarily receiving and storing heat from an online energy source;
   obtaining a weather forecast; and
   controlling charging and discharging of the hydrant boiler based on the weather forecast.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

Some example embodiments of the invention will be described with reference to the accompanying drawings, in which:
Fig. 1 shows a schematic picture of a system according to an embodiment of the invention;
Fig. 2 shows a schematic diagram of a hydrant boiler according to an embodiment of the invention;
Fig. 3 shows a block diagram of a controller suited for controlling various operations of the system of Fig. 1;
Fig. 4 shows a perspective view of a system according to an embodiment of the invention; and
Fig. 5 shows a side view of the system of Fig. 4.

### DETAILED DESCRIPTION

In the following description, like reference signs denote like elements.

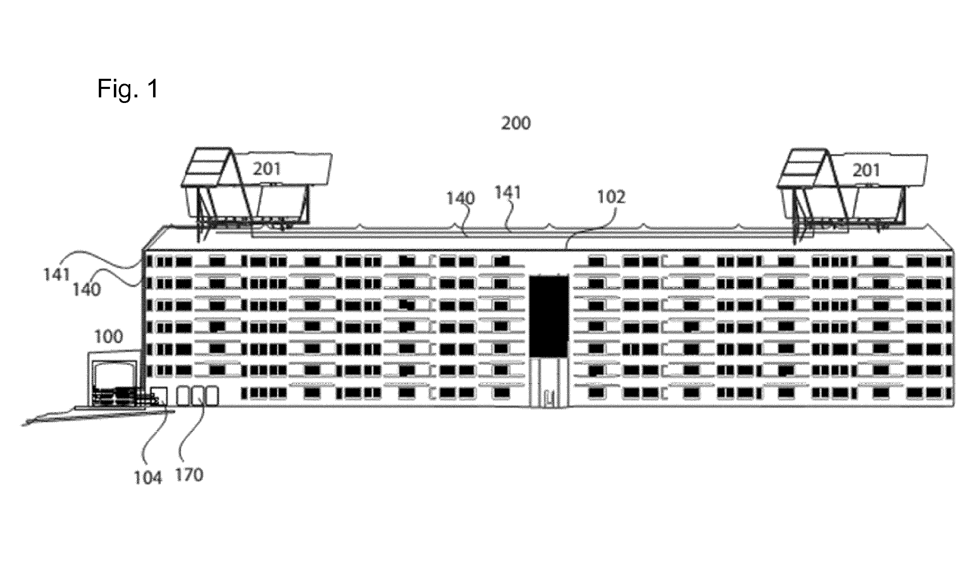

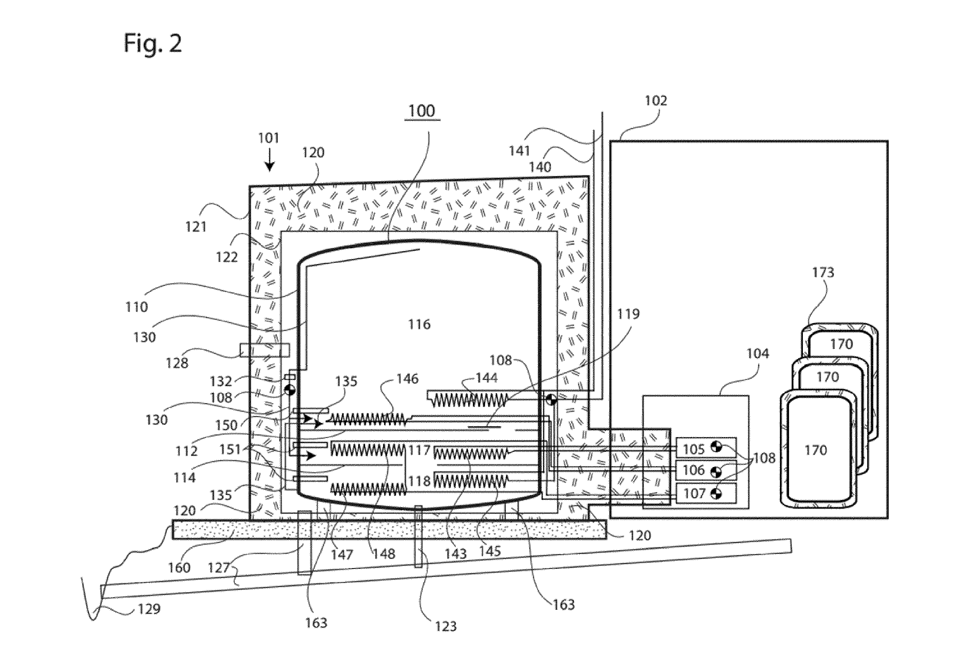

List of references in Figs. 1 and 2:
100 hydronic boiler
101 hut
102 building
104 technical utility room
105 central heating, input and output
106 district heat or burner, input and output
107 hot domestic water, input and output
108 circulation pump
110 hydronic boiler casing (e.g. up to 10 Bar, 100 m³)
112 first stratification divider
114 second stratification divider
116 top section, water temperature from 20°C to 95°C...150°C, for example
117 middle section, water temperature 60 to 90°C, for example
118 bottom section, water temperature 10 to 80°C, for example
119 movable first stratification divider supplement part; for example, a hole or opening, valve, pipe, heat pump, movable stratification divider supplement part
120 hut insulation
121 outer wall of hut
122 inner wall of hut
123 drain coupling
127 leak water output pipe to drain or ditch
128 steam reject pipe and air input for emptying the boiler
129 ditch
130 hot water interconnect from top section 116 to middle section 117
132 air access valve
135 cool water circulation from bottom section 118 to top section 116
140 solar energy circulation return pipe
141 solar energy circulation supply pipe
143 central heating; for example, coil or heat exchanger
144 high temperature solar heat input; for example coil or heat exchanger
145 low temperature solar heat input; for example coil or heat exchanger
146 district heat or burner. Solar coil or heat exchanger, for example
147 domestic water preheating heat input; for example coil or heat exchanger
148 domestic water heating heat input; for example coil or heat exchanger
150 electric immersion heater up to 95°C...150°C, for example
151 electric immersion heater up to 90°C, for example
160 foundation
163 boiler feet
170 conventional domestic boiler (not a part of 100)
173 conventional domestic boiler insulation (not a part of 100)
180 controller

Fig. 1 shows a schematic picture of an overall system according to an embodiment of the invention. The overall system comprises an outdoors energy storage 100 that is located outside the building being heated, and a roof-mounted solar power system 200.

As appears in Fig. 1, the energy storage 100 locates outside, preferably adjacent or directly against an exterior wall of the building that is being heated (the building in short). The energy storage 100 is preferably next to a technical utility room of the building for simple and energy efficient connecting of the energy storage. The energy storage comprises a hut for weather proofing and further insulating a hydrant boiler and for allowing using a hydrant boiler too large for locating inside the building.

The energy storage 100 comprises preferably one large hydrant boiler and / or a plurality of hydrant boilers connected in parallel or series.

The hydrant boiler is preferably insulated solely by an insulation 120 contained by the hut. All of the hydrant boiler's surface, pipes, valves, thermostats, meters and other equipment may be installed without additional insulation by making the hut very well insulated. The hut may be insulated e.g. by a layer up to 0.3 to 1 m thick. The hut is preferably windowless and air tight, with a seamless inverted cup form top part. For service, the hut may have a well-insulated and sealed lockable service access such as a door or lid. A ventilation connection for pressure balancing and steam output 128 may be insulated e.g. by loose wool or compartmenting flaps that open by small pressure difference.

The hydrant boiler is preferably constructed to a nominal pressure of 10 bars or 1 MPa water pressure at 1 bar ambient pressure so that the water in the hydrant boiler may be safely heated to approximately 150°C as opposed to the 80°C of conventional domestic boilers 170. At 10 bars, the boiling point of water is approximately 180°C. Suitable pressure vessels are commonly available due to different industrial applications in other technical fields. In another example embodiment, the hydrant boiler is constructed to a nominal pressure of 1.3 bars or 0.13 Mpa and maximum water temperature of 95°C.

### Indoor space requirements:

External energy storage 100 requires no indoor space. In the outside of the building, space may be needed equivalent to a couple of parking slots. In an example embodiment, the hydrant boiler 110 has approximately 100 m³ water volume, with diameter of 5 m and height of 5 m.

Smaller footprint can be attained without reducing the volume by reducing the diameter and respectively increasing the height. However, in this range, the increase of the diameter and the height by one meter roughly doubles the volume and energy capacity of the hydrant boiler 110. The hut 101 may add up to the dimensions of the hydrant boiler by approximately a meter. The hut may have a rectangular or square footprint. In that case, the addition to dimensions may be greater at the vertical edges of the hut.

Transport and mounting: In road transport, the diameter may be most relevant of the dimensions of the hydrant boiler. Up to 4 m diameters may be transported relatively simply. Also the length can easily be up to 10 m. It is observed that the omission of insulation 120 from the surfaces of the hydrant boiler facilitate the transportation by reducing mechanically sensitive structures and by also reducing the space requirements in the transportation. The weight of e.g. 50 to 150 tons requires a sufficiently sturdy foundation 160. In one alternative embodiment, the hydrant boiler may be partly dug into the ground. In this case, the hut 101 may be formed of two parts, a bottom part that is permanently maintaining surrounding soil away from the hydrant boiler and a preferably removable top part. However, underground installation, while reducing weight from the foundation supporting ground by the weight of the removed mass of soil, may necessitate leaving greater space around the hydrant boiler which would result in greater warm volume and heat losses or insulation costs.

Preferably, the foundation 160 and necessary through-foundation couplings are first constructed. Then the hydrant boiler 110 is lifted in place preferably directly from a lorry and the necessary couplings (plumbing, electric and control) are made and the hydrant boiler is tested, filled and pressurized before the hut 101 is installed around the hydrant boiler.

Energy storage capacity and storage price: Whereas minimum temperature of a boiler (at heat exchanger that produces warm domestic water) is about 60°C, the maximum temperature range of the hydrant boiler 100 is e.g. 95°C to 150°C-30°C = 65°C to 120°C instead of some 40°C of a conventional domestic boiler 170. Further still, the hydrant boiler 100 can be very efficiently layered by transferring heat in a controlled manner between different sections or layers of the hydrant boiler 100.

In an example embodiment, the hydrant boiler may be deeper discharged e.g. by preheating water 147 therewith and subsequently heating with electric or gas heater. In that case, the minimum temperature may be reduced even lower e.g. down to 20°C (or even lower) so that the maximum temperature range 116 would be 130°C. Alternatively or additionally, the maximum temperature can also be reduced e.g. to 95°C or 130°C.

In a block of flats 102, the aforedescribed 100 m³ hydrant boiler 110 can be used as opposed to e.g. 3 pieces of 3 m³ boilers 170. Some 10 to 14 MWh (millions of Watt hours) can be buffered by the described hydrant boiler 100 with maximum temperature ranges of 90°C to 120°C whereas the traditional solution 170 would produce approximately 0.5 MWh buffering capacity. On the other hand, the price of three 3 m³ boilers is close to that of one large boiler whereas the accessory equipment and the installation of the pipes, electricity and control connections are apparently more economical to perform with one boiler 101 outside than three units 170 inside the building 102. Hence, the heat storage capacity 100 cost amounts to ca. 5 % of that of the conventional boilers 170.

Safety: large amounts of water above its boiling point may be risky to store indoors 102. Even a small leak in a pressurized hydrant boiler 110 may incur significant amount of 100°C steam that could cause indoors severe moisture damage not to mention risk of injuries. Moreover, the damage could be expensive and slow to repair, as repair would likely be possible only after rejecting all the steam, emptying the hydrant boiler and cooling the boiler. Conventional boilers 170 operate at temperatures safely below the boiling point so that the problems incurred by higher temperatures and water amounts are inherently avoided. Moreover, emptying a couple of cubic meters of water through sewers can be done in reasonable timeframe, but e.g. 100 m³ would likely pose some problems. On the other hand, locating the hydrant boiler outdoors in its dedicated hut 101 solves all these issues. As the boiler is outdoors, there is no direct access to indoor premises. The locked, sturdy and windowless hut protects and insulates the hydrant boiler from outside air. It is not possible to touch burning hot surfaces. If a leak occurred e.g. in the hydrant boiler or any of its pressurized parts, sprinkling of hot water would be inhibited by the hut by providing safe draining 123 and steam eject passages 128 in a controlled manner. The hydrant boiler has a normal safety valve releasing excessive pressure e.g. above 10 bars through which reject steam and water can be safely led to outside, preferably to a drain 127 or ditch 129. In the normal air pressure, water instantly vaporizes so that any running water cools by the vaporizing enthalpy to 100°C from which it would relatively fast cool down to safe temperatures.

The hut 101 is intended to make the hydrant boiler both economical and also safer for the inhabitants of the building 102, as it protects passers-by from hot surfaces and from hot substances in most or all thinkable leak situations.

Charging and discharging: In the summertime, 10 MWh typically suffices in a typical Finnish block of flats for a couple of weeks' worth of hot domestic water production 107. Such an energy storage also suffices to buffer the heat that is produced by a couple of large Solixi® CSP heat collectors 201 over a course of about one sunny week even if the energy consumption were low. Heat can be storage enough for a week without further renewable energy e.g. because of a very rainy week. The Solixi® 201 may produce nearly 200°C temperatures, subject to circulation 141 speed 108 and the heliostat programming. With such heat, the hydrant boiler can be heated 144 to its desired maximum temperature. When the hydrant boiler is fully charged, the heliostats 201 are turned away from the insolation collector to stop concentrated solar collection. In result, the Solixi® no longer produces high temperature water supply for the hydrant boiler.

In the winter time, 10 MWh typically suffices in a block of flats 102 for the consumption of 2 to 4 days. If no renewable energy is available, the hydrant boiler is charged in the night time or when inexpensive energy is available via district heating 106, 146 (that uses e.g. coal and biofuels), via electricity 150, 151 (wind power, nuclear power) or other source. At more expensive energy supply times, the hydrant boiler is discharged to avoid use of peak priced energy. Further energy can be harvested through the Solixi® system 201 also in the winter time, as they can be optimized for best efficiency at the cold and sunny high pressure spells when the demand is also the greatest.

Heat losses: Heat transfers spontaneously from higher temperature to lower in three different mechanisms: radiation, conducting and convection. In the hydrant boiler, heat raises to the top 116. The top is preferably insulated without significant conducting bridges or gaps that could incur convection or radiation. This insulation 120, preferably 300 mm to 1000 mm, significantly inhibits radiation. Moreover, the interior surface of the hut 122 may be configured to radiate heat back to the hydrant boiler e.g. by covering with a suitable infrared reflective coating.

Also the period of large temperature differences can be reduced by preferably heating the hydrant boiler only to the temperature necessary and as late as possible e.g. before the morning so that the heat consumed by morning showers etc. makes the period of highest temperature differences between the boiler and surrounding air to somewhat short. Moreover, thanks to using a hydrant central heating 106 in the building, the indoor temperatures of the building can be optimized for energy saving, convenience and moisture control e.g. by dropping unused space temperature by a degree or two for the night times and also for the time inhabitants are way. The leak from the hydrant boiler 100 may be far smaller than from the building 102, despite the higher temperatures, because of the particularly efficient insulation 120.

A great hydrant boiler 110 is also more efficient because the necessary accessories' proportional hot surface area is the smaller the greater the boiler. Also the surface area of the boiler in comparison to its volume is the smaller the more spherical the boiler is and also because the heat radiating surface area grows in the second power of the size of the boiler whereas its volume grows in the third power.

The insulation thickness 120 of the hut is significantly greater than that of typical domestic boilers 173 (e.g. 30mm - 100 mm). Also the heat losing surface is far smaller as the hut contains all the hot parts and provides a continuous and compact common insulation. A continuous and dense outer wall 121 of the hut further reduces the heat loss.

By locating the hydrant boiler in a hut next to a wall and the solar collector system on the roof, the heat circulation pipes 140, 141 can be mounted along the exterior of the roof and walls without making any holes in the cover of the building 102. Hence, the weather proof covering need not be compromised and it is possible to practically eliminate the risk of introducing up to 200°C heating fluid indoors. The pipes can be run high up and far from people and they can be insulated with thick layers as there is space up to the sky on the roof and typically also in good measures on the outer wall as well. Moreover, the heat transfer pipes are hot only at the highest heat harvesting spells in the warmest summer insolation so that the total impact on heat loss from the heat transfer pipes is insignificant.

In the winter, the hydrant boiler can be heated to 95°C to 150°C e.g. by electric immersion heater 150 or using a stove such as one using chopped woods or biofuels 106, 146. Electric immersion heater 150, 151 operates with a constant efficiency regardless of the temperature in the boiler, 1 consumed kWh heats the water in the boiler by exactly the same amount regardless whether the water is heated from 55°C to 60°C or from 120°C to 125°C.

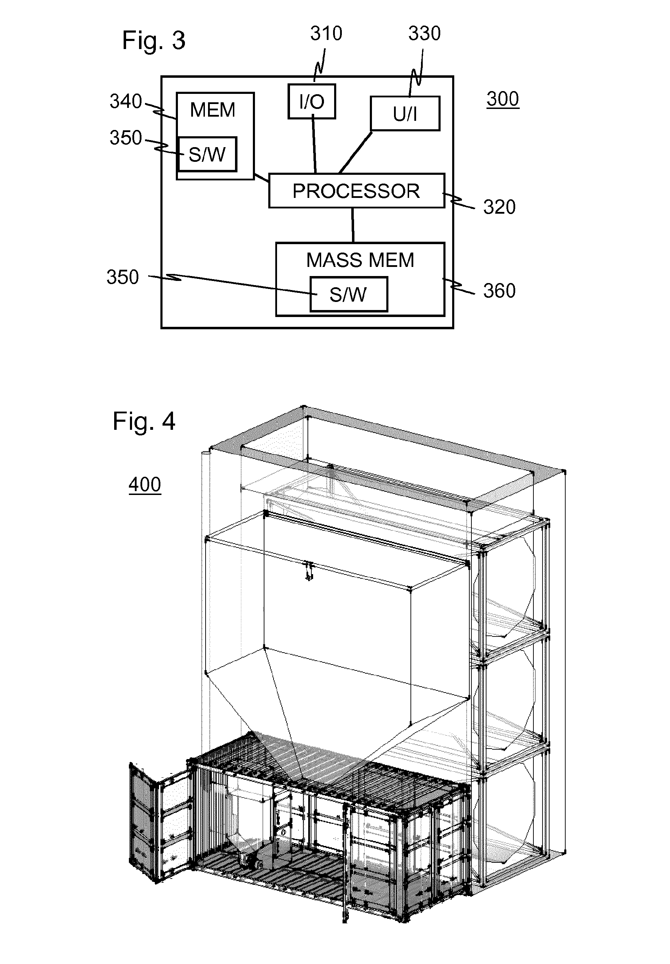

Controller (reference sign 180 in Fig. 3): the hydrant boiler is charged preferably according to a consumption forecast by anticipating the developing of weather and price and/or availability of externally sourced energy. The hydrant boiler is primarily charged by locally produced renewable energy such as solar 201 or wind power as its marginal production cost is practically zero. When it is computed that according to the consumption forecast, the locally produced renewable energy is insufficient for consumption, energy is charged into the hydrant boiler in a manner minimizing the total cost. For instance, if a weather forecast makes it apparent that the supply of wind power will decrease the price of electricity at given hours, electric charging can be performed at such hours. Sometimes, electricity has been even free e.g. in Denmark, due to the excessive production of wind power in comparison to demand. Similar forecasts can also be obtained for hydropower and other energy sources that effect on the price and fluctuation of price of the online energy.

The controller is preferably configured to store in its memory temperatures of the hydrant boiler, pressure in the hydrant boiler (measured by a sensor not shown), received local energy and energy consumption at all times. By combining these data with the consumption forecasts and weather forecasts, the controller can self-adapt its operation to even better optimize the use of different energy sources for the charging of the hydrant boiler. Moreover, the hydrant boiler may be used to release heat e.g. to a district heating system by heating its heating fluid (e.g. liquid and/or steam). The controller may also be capable of performing self-diagnostics by comparing the temperature and pressure measurements to the properties of the heating water or medium used in the hydrant boiler.

The controller may be remote controlled. The controllers may be grouped so that controllers of given region are broadcast same forecasts and they can be updated in real time at desired intervals or periods of time. Also the controllers can be equipped to provide feedback data such as measurement reports and fault reports so that service can be arranged often before any failure is noticed by the inhabitants or even technical service personnel of the building.

The controller may send its measurement data and receive its control from mobile equipment such as a mobile phone. Hence, the controller 180 need not have any local user interface at all, but all the necessary data and controls can be effected e.g. through a mobile phone with suitable software. The controller can be located in a communicative connection anywhere e.g. in the hut, technical utility room 104 of the building, or e.g. with the roof-mounted solar harvester 201 wherein wireless internet access is typically rather reliable.

Cost-effectiveness and reserve power: The large size of the hydrant boiler 100 proportionally decreases the material and construction costs per energy storage capacity. The auxiliary equipment such as pumps, valves, interconnects, controls etc. need not be multiplied for using plurality of smaller boilers 170. A typical 100 m³ water tank costs approximately 20 k€ to 30k€. The hut with its foundation, mounting, water coils etc. and connecting as part of an old central heating system is likely to double that price to approximately 40k€ to 60k€. One MWh costs after tax in Finland ca. 80 € (medium price of district heating 2013 in Finland) and the price is forecast to increase so that the medium price for next 10 years may be estimated as 100€/MWh including the equipment and service. A 100 m³ hydrant boiler can buffer 10 MWh of energy, worth 1000 €. The typical block of flats 102 in Southern Finland annually consumes ca. 600 MWh that is equivalent of 60 full charging and discharging cycles of 10 MWh. The maximum buffering capacity would be 365 full charging and discharging cycles. Hence, only about 60/365 = 16 % of the maximum buffering capacity would be utilized. Indeed, it is economical to over-dimension the hydrant boiler 100, as the increasing volume increases less than proportionally the price and space consumption whereas the greater volume enables lower temperatures and heat losses as well as reduces the occasions in which local renewable energy production 201 would not suffice. Energy may be stored in the summer time for a couple of weeks and in the winter for a few days even in the demand peak seasons. In practice, energy would suffice for longer, if Solixi® solar harvesters 201 are used as they produce heat in the summers also in rainy weeks and in the winter at sunny cold high air-pressure seasons. The maximum temperature 150°C and maximum charging are needed only relatively seldom and for short periods.

If energy can be sourced on average 20% more inexpensively (e.g. by avoiding peak prices, using solely night time electricity), the saving is 12k€ a year.

A typical block of flats 102 can be equipped with two roof-mounted Solixi10 heat harvesters 201 that produce approximately 160 MWh in Southern Finland, worth ca. 16 k€ or equivalent of 16 full charging / discharging cycles. In practice, sunshine can be used to charge the hydrant boiler in about 300 days a year, typically by less than 1 MWh per day. Most of the solar power can be stored and made use of, as average charging is less than 10 % of the capacity of the hydrant boiler.

The efficiency can be further enhanced by fast-cycle energy trade by making use of the free capacity to sell reserve power 146, 106 at peak times and charging when the energy is inexpensive (typically night time).

Based on the foregoing cost-effectiveness calculation, the repayment period of the hydrant boiler investment is about 1-3 years.

### MULTILAYER EXAMPLE

Fig. 2 shows a schematic diagram of a hydrant boiler according to an embodiment of the invention that is capable of particular multilayer operation.

The hydrant boiler has three sections: top section 116, middle section 117 and bottom section 118, with respective water temperatures of 20°C to 95°C...150°C, 60°C to 90°C and 10°C to 80°C, respectively.

The bottom section 118 contains a low temperature solar coil 145 and domestic water preheating coil 147 that helps to keep the bottom section cold and to enhance the efficiency of renewable energy charging with low-ish temperatures (e.g. with heat pumps, solar harvesters 201 at lower insolation levels).

The middle section 117 contains domestic water heating coil 148, central heating coil 143 and an electric immersion heater 151 for heating up to 90°C.

The top section 116 has a high temperature solar coil 144 (or other hot local energy input for > 60°C heating temperature input 146). At the bottom region of the top section 116 there is an electric immersion heater 150 for heating up to 95°C...150°C. Immersion heaters 151 may be further provided also in the bottom section 118.

The temperature of the top section 116 is normally 60°C to 95...150°C, but when closed by the first stratification divider 112 and its movable supplement part 119, the temperature of the top section 116 may fall under 20°C.

The bottom and mid-sections may each constitute e.g. 10 % to 20% of the volume of the hydrant boiler (not necessarily equal volumes), the top section e.g. 60% to 80 % of the volume of the hydrant boiler. For instance, in a 100 m³ hydrant boiler there is sufficient room for the necessary coils and it is possible to arrange sufficient heat transfer from the boiler water through the central heating coil 143 so that there is no significant downside to using separate water circuit in the central heating instead of running the central heating water to and from the hydrant boiler. It is appreciated that the separation is typically desirable in order to prevent access of the hydrant boiler content to the building via the central heating circuit.

Continuing further about the functional dividing of the hydrant boiler into a plurality of sections such as the bottom, mid and top sections 116-118, the separate sections can be partly separated by stratification dividers such as plates that may contain e.g. at their central region a pass-through for enabling thorough heating of the hydrant boiler. Using a movable first stratification divider supplement part 119 as a controllable valve, the middle section 117 can be controllably closed and again opened to the top section. When closed, the top section 116 can be kept cooler when there is no need for the entire capacity of the hydrant boiler so as to reduce heat loss. To this end, the air gap between the hydrant boiler and the hut may also be substantially closed by (optionally insulating) plates arranged as a rim filling the air gap at the border of the middle section 117 and the top section 116. Any or all of the first and second stratification dividers 112, 114 may comprise an insulation configured to inhibit heat leak between sections separated by the divider in question.

For instance, in system with solar power as the sole local energy source, the hydrant boiler could be made to operate by its bottom and middle sections 118, 117 allowing the top section 116 to cool down to some maintenance temperature such as 20°C if only online heat is being used and if there are no substantial tariff fluctuation to be utilized.

Heat is transferred from the top of the top section 116 to the middle section 117 using a pump 108 and internal channeling 130 formed e.g. of one or more pipes. This top to middle section heat transfer is started e.g. when the temperature of the middle section falls under 65°C. At this time, the stratification divider supplement part 119 is open so that water flows from the middle section 117 to the top section 116. This flow completes a water replacement circuit between the middle section 117 and the top section 116.

The opening 119 in the first stratification divider 112 can be functionally coupled to the bottom of the middle section e.g. by locating a length of broad vertical pipe 135 that leads water from the bottom 118 to the top section 116. Thus, replacement water running to the top section 116 is of the coolest part of the top section 116 and heat transfer from the top section 116 to the middle section 117 can further be enhanced.

The opening 119 in the first stratification divider can be closed and hot water be pumped through the channeling 130 to the middle section 117 so that warm water circulates through the bottom part 118 via pipe 135 to the bottom of the top section 116. In this way, the entire hydrant boiler 110 can be discharged to e.g. 20°C temperature, when hot domestic water is only preheated 147, 148 by the hydrant boiler.

De-stratification of the top section 116 can be implemented using a circulation pump and a channel 130 to pump water from the top of the top section 116 to the bottom of the top section 116. Alternatively, a mixer can be located e.g. on a side wall or the top wall of the hydrant boiler. Power can be transferred to such a mixer e.g. by using induction transfer through a wall of the hydrant boiler so as to avoid making additional holes in the wall of the hydrant boiler.

In the middle section 117, the hot domestic water coil 148 and the district heating coil 146 can produce consistently desired 60°C to 90°C fluid. This is useful in the typical buildings in which 90°C cannot be exceeded e.g. because of pressure considerations of the pipes in the buildings.

The bottom section 118 can be kept relatively cool so as to enhance the efficiency of solar power collecting 201 also when only low temperature heating fluid 140 is available. Yet the top section 116 is usable for storing plenty of hot water.

The top section 116 can be heated e.g. using electricity 151, district heat 146, a stove 146 or a CSP unit 144 such as the Solixi® 201. It is also possible to heat all of the plural sections with separate heating coils and likewise any of the sections can be discharged with district heating coils 146 to sell energy to the district heating system 106 while a local solar energy unit 201 generates further heat 140 to the hydrant boiler. Yet the bottom section can be maintained cool so that the low temperature heat generation can be used to charge the hydrant boiler.

Most of the hydrant boiler 116 is used to store hot water up to 95 °C...150°C, e.g. 80 % of the volume of the boiler. Electric immersion heaters 150 in the top section can be used to aggressively charge the boiler e.g. with wind power on the moments that any excess thereof is available. Such energy storing can be commenced practically without delay e.g. on remote control.

It is appreciated that one form of remote control may involve receiving real-time tariff signaling for online energy and using the tariff information to determine when charging or discharging is to be performed.

Upper portion of the hydrant boiler 110 can be built without any inlets or ducts so that its surface is smooth and heat radiation is reduced. All the connections and controls can be located in the lower portion of the boiler e.g. on level with a service lid wherein temperature stays e.g. below 90°C to further avoid heat losses. For reduction of convection incurred flows along the sides of the boiler, the air gap between the boiler and the hut may be bridged by insulation plates or simply by metallic sheets arranged as rims e.g. at every meter.

Fig. 3 shows a block diagram of the controller 180 suited for controlling various operations of the system of Fig. 1. The controller 180 may be implemented e.g. by a suitably programmed laptop computer. The controller 180 is implemented as a low-power device that has rather modest capabilities in comparison to the server 590.

The controller 180 comprises an input / output (I/O) block 310 for exchanging information with other entities, a processor 320 for general control of the operations of the controller 180, a user interface (U/l) 330, a memory 340 that can be a typical random access memory, computer executable software (S/W) 350 or instructions for the processor 320, a non-volatile memory such as a mass memory 360 that stores the software 350 when the controller is not powered. The controller 180 may be battery operated with power supply to the battery from a charger and/or photovoltaic elements. In some embodiments, the controller 180 may operate solely with photovoltaic power and then power breakages are frequent.

It is appreciated that one or more of the blocks of the controller 180 may be integrally formed. On the other hand, any block of the controller 180 may be distributed or shared between two or more elements. For instance, the processor 320 may comprise one or more cores or even separate processor units operating together as one functional unit. Likewise, the memory and the processor may be formed on a single integrated circuitry, e.g. on one application specific integrated circuit (ASIC).

A skilled person appreciates that in addition to the elements shown in Figure 3, the controller 180 may comprise other elements, displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Additionally, the controller 180 may comprise a disposable or rechargeable battery (not shown) for powering the controller 180 when external power if external power supply is not available.

The appended abstract is incorporated by reference as one example embodiment of the invention.

Various embodiments have been presented. It should be appreciated that in this document, words comprise, include and contain are each used as open-ended expressions with no intended exclusivity.

The foregoing description has provided by way of non-limiting examples of particular implementations and embodiments of the invention a full and informative description of the best mode presently contemplated by the inventors for carrying out the invention. It is however clear to a person skilled in the art that the invention is not restricted to details of the embodiments presented in the foregoing, but that it can be implemented in other embodiments using equivalent means or in different combinations of embodiments without deviating from the characteristics of the invention. For example:
- Any heat transfer coils may be replaced or supplemented by plate heat exchangers such as free flow plate heat exchangers.
- The inter-layer heat transfer means can be formed using one or more of any following item: a pump; a heat pump; a controllable opening between two layers; and a controllable valve configured to adjust flow through a pipe that interconnects two layers.
- The hydrant boiler may be used for cooling purpose as well, e.g. for cooling of the building for which heat can be stored in the same hydrant boiler, but in different layers. If a water-water heat pump is used to transfer heat from one (e.g. bottom) layer to other layer(s), the efficiency can be very good, as the temperature difference may be relatively small. For example, a bottom layer can be kept at about 10 °C while the next layer can be at about °30 C. While heat receiving layer may not be warm enough to heat domestic water for shower, it can well pre-heat domestic water from °5 to e.g. 25 °C. The heat pump used for cooling can be of rather low power, when the associated heat storage is large so that the cooler parts of the day can be used to cool down the cooling layer and then warmer parts of the day can gradually heat up that layer again.
- The role of the hydrant boiler can also be conveniently changed as a heat storage from a heating energy storage (heating referring to ability to heat water and / or structures or air within or outside of the building) to a cooling energy storage such that during warm season, a decreased proportion of the volume of the hydrant boiler is used for heating energy buffering and an increased portion of the volume of the hydrant boiler is used for cooling energy buffering. The timing of the cooling can be set taking into account the weather; cooling demand; cooling energy availability; and / or cooling energy price. The hydrant boiler can be simultaneously used for buffering both heating energy and cooling energy thanks to its division into different layers and the efficient stratification control. The controller can be configured to control the cooling-related operation of the hydrant boiler.
- If the hydrant boiler is heated using a solar energy harvester that operates with controllable heliostats that are configured to stop heating a heat collector when necessary to prevent overheating thereof and the hydrant boiler is used as a cooling energy buffer, the heliostats can be configured to reduce harvesting of solar power so that a desired proportion of the hydrant boiler can be kept cool or let cool down. In other words, the operation of the solar energy harvester may be configured such that during warm season, less solar energy is collected than outside the warm season in order to make use of the heat storage of the hydrant boiler for cooling. For example, the pre-heating of hot domestic water can be used to cool down desired portions (e.g. containers or layers) of the hydrant boiler during warm season so that the buffered cooling energy is further usable (for air conditioning of the building, for example).
- In exceptional circumstances, if the draw of the building for heating energy is not sufficient to prevent excessive heating of the hydrant boiler (e.g. when more heat is formed or should be formed is some layer(s) by cooling some other layer(s)), the hydrant boiler can be efficiently cooled by heating some tap water using heat in the hot layer(s) and directing so heated water to the drain.
- The hydrant boiler may be formed of tank containers such as the standard tank containers of 27 m³ or 40 m³ volume. The total volume of the hydrant boiler may be, for example, 75 m³...120 m³. The tank containers are typically readily equipped with a frame that enables stacking and they have the connectors that facilitate their connecting in parallel and / or series. One or more tank containers may be configured to operate as one layer, as two or more tanks may be mounted in parallel, preferably at approximately same height. The walls of the tank containers then also act as stratification means and functionally divide the hydrant boiler into a plurality of separately controllable layers. Different layers need not be provided with same number of tank containers. Normal containers can be used between or adjacent to the tank containers to house equipment and / or fuel for a local power plant. The tank containers are relatively inexpensive and easy to transport in comparison to transporting a single massive container. The tank containers may comply with an ISO standard, such as T1 or T11.
- The capacity of a hydrant boiler formed of the tank containers can be flexibly adapted also according to needs that occur afterwards by increasing or reducing the number of tank containers and / or by bypassing one or more tank containers or by terminating such bypassing.
- The entire hydrant boiler can be disassembled and transported very quickly and inexpensively in comparison to a one-part hydrant boiler. Service and repair of hydrant boilers can be arranged in one or few sites. Service breaks can be shortened by substituting tank container(s) taken to service by other tank container(s).
- A technique container can be pre-installed for easy and fast on-site connecting with the tank containers to complete a hydrant boiler system when the system is being installed. The technique container may comprise, for example, control equipment, stratification control means (e.g. pumps, heat exchangers) and / or pressure control equipment (e.g. pressure accumulator; a pump controlled-auto pressurized expansion tank; and / or a compressor type expansion tank) and other equipment (e.g. uninterrupted power supply). The technique container can be inherently physically well secured and easily connectable with a hydrant boiler and stackable with tank containers of the hydrant boiler. The technique container can also be equipped with another heating source such as a burner and / or kettle for obtaining heat from a burner. Installation tools and / or supplies and / or solar energy harvester mounting tools, supplies or parts (e.g. largest body parts and thin mirror plates) can also be contained in the technique container. The hydrant coiler may replace or supplement district heating. Losses in district heating are typically about 10 % and similar losses typically occur inside building. The losses are at greatest during consumption peaks while hot water is directed in the network and the outdoors temperature is low. The heat losses can be efficiently reduced by decreasing temperatures, temperature difference and the heat transfer distance. The hydrant boiler 100 evens consumption peaks, resides close to the heating target (building 102) and is very well insulated, each of which significantly reduce heat losses. The reduction of heat losses spare fuel whether a heater is operated within a heat plant containing the hydrant boiler 100 or remotely with heat distribution through the district heating.

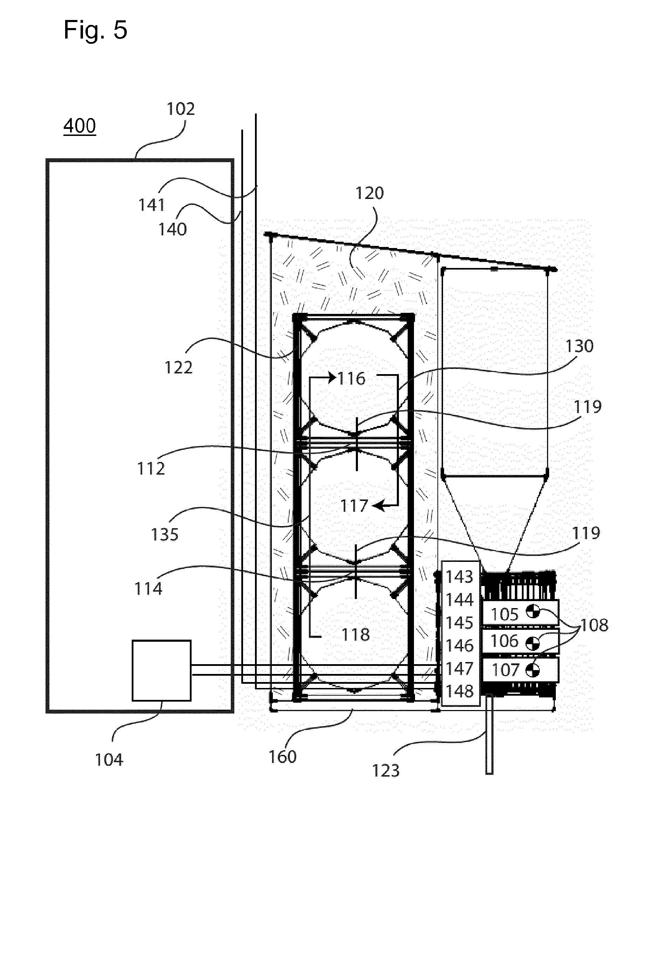

- A hydrant boiler assembled from tank containers is sturdy and it distributes the force evenly on its entire footprint. Thus the foundation is inexpensive to construct and it can also be afterwards improved by temporarily moving the containers out of the way. As a modular and somewhat flexible structure the hydrant boiler is even tolerant to earth quakes.
- A hydrant boiler may be formed of barrels or other standardized vessels suited for storing heating water, manner similarly to the container based hydrant boiler.
- A local power plant can be formed within the hut. For example, a hydrant boiler may be formed to contain two or three adjacent tank containers stacked in one row. A burner and fuel storage can be stacked in an adjacent row or in containers within the row in which the container tanks forming the layers are stored. If the fuel is liquid, some tank containers can be used to store fuel for the power plant. Figs. 4 and 5 illustrate an example embodiment of a system or power plant that is implemented using tank containers to form the hydrant boiler. A technique container is also shown by Figs. 4 and 5.

Various embodiments of the present invention provide a number of technical effects and advantages over known prior art. For example, heat storage within the hydrant boiler can be controlled to occur within desired layers and the heat distribution can be correspondingly adjusted. This controlling can be performed e.g. using pumping and / or controlling ability of fluid to flow between different layers e.g. using automatically adjustable openings and / or channels and automatic valves. The layer-specific heat storing can be used e.g. to enable maintaining the temperature of one layer suitable for ordinary central heating and / or warm water supply equipment (e.g. pumps and taps). The layer-specific heat storing can provide particular advantages in combination of the use of weather dependent heat source and weather forecasts. For example, different layers can be suitably emptied from heat and the heat transfer from solar source can be made more efficient by increasing the temperature difference between outgoing and incoming fluid of solar heat collector(s).

It is commonly understood that there are three ways of overcoming the problem of poor storage tank configuration when loading solar energy. The first way is to physically modify the storage tanks and booster element arrangement to reduce mixing of hot water on the top and cold water on the bottom of the boiler; the second is to control the timing of operation of the boost element so that priority is given to solar heating; third way is to transfer heat to the building or another heat storage. A fourth way and possibility is provided by the hydrant boiler described herein: the heat transfer within the hydrant boiler may be controlled, whether or not heat is transferred between the hydrant boiler and the building to which energy is provided from the hydrant boiler.

Furthermore, some of the features of the afore-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A system comprising:
a hydrant boiler (100) configured to store heat energy for a building (102);
**characterized by**:
a hut (101) configured to house the hydrant boiler, wherein the hut is separated by insulation (120) from the building (102);
a heat source coupling (140, 141) configured to connect a solar energy collector to the hydrant boiler;
a controller (180) configured to control charging and discharging of the hydrant boiler (100);
stratification means (112, 114, 119) configured to functionally divide the hydrant boiler into a plurality of separately controllable layers (116, 117, 118); and
inter-layer heat transfer means (119, 130, 135) configured to transfer heat from one of the separately controllable layers (116, 117, 118) to at least one other layer.

2. The system of claim 1, **characterized in that** the controlling of the charging and discharging of the hydrant boiler (100) by the controller (180) comprises controlling the inter-layer heat transfer means (119, 130, 135).

3. The system of claim 1 or 2, **characterized in that** the hydrant boiler (100) is configured to receive heat via the heat source coupling (140, 141) with maximum temperature that is greater than 120°C.

4. The system of claim 3, **characterized in that** the maximum temperature is greater than 150°C.

5. The system of any of preceding claims, **characterized in that** the hydrant boiler (100) is configured to store heat energy so that during a first period of time, hot water is stored in the hydrant boiler for heating of the building, and during a second period of time, cold water is stored in the hydrant boiler for cooling the building or a portion thereof; wherein the first and second periods are same; different; or partly overlapping.

6. The system of any of preceding claims, **characterized in that** the controller (180) is configured to control the online heater to charge the hydrant boiler based on at least one of: weather forecast; online energy availability forecast; online energy source and online energy price forecast.

7. The system of any of preceding claims, **characterized in that** the top of the hydrant boiler and the top of sides (101) of the hydrant boiler are insulated (120) by a continuous layer of insulating material.

8. The system of any of preceding claims, **characterized in that** the hydrant boiler (100) is configured to store, when fully charged, sufficient heat for heat consumption of the building (102) during wintertime for at least 48 hours.

9. The system of any of preceding claims, **characterized in that** the hydrant boiler is configured to store water in up to 10 bars pressure.

10. A method comprising:
storing heat energy in a hydrant boiler (100) for a building (102);
**characterized by**:
housing the hydrant boiler in a hut (101) that is separated by insulation (120) from the building (102);
primarily receiving and storing heat from a solar energy collector to the hydrant boiler;
secondarily receiving and storing heat from an online energy source;
controlling charging and discharging of the hydrant boiler (100);
functionally dividing the hydrant boiler into a plurality of separately controllable layers (116, 117, 118); and
transferring heat from one of the separately controllable layers (116, 117, 118) to at least one other layer.

11. The method of claim 10, **characterized in that** the controlling of the charging and discharging of the hydrant boiler (100) comprises controlling the inter-layer heat transfer.

12. The method of claim 10 or 11, **characterized in that** the receiving of heat from the solar energy collector is performed with maximum temperature that is greater than 120°C.

13. The method of any of claims 10 or 11, **characterized in that** the storing of the heat energy in the hydrant boiler comprises:
storing hot water in the hydrant boiler during a first period of time for heating of the building; and
storing cold water in the hydrant boiler during a second period of time for cooling the building or a portion thereof;
wherein the first and second periods are same; different; or partly overlapping.

14. The method of any of claims 10 to 13, **characterized in that** the storing of heat is performed by storing water or other heat transfer medium in up to 10 bars pressure.

15. The method of any of claims 10 to 14, **characterized in that** the method further comprises obtaining a weather forecast and **in that** the controlling of the charging and discharging of the hydrant boiler (100) is based on the weather forecast.
